# EUROPEAN PATENT APPLICATION

(11) **EP 2 736 259 A1**
(43) Date of publication of application: **28.05.2014**
(21) Application number: 13194157.7
(22) Date of filing: 22.11.2013
(51) Int. Cl.: H04N 13/04

(54) **Display apparatus and method of controlling the same**

(30) Priority: 23.11.2012 KR 20120133924
(71) Applicant: Samsung Electronics Co., Ltd, Gyeonggi-do 443-742 (KR)
(72) Inventor: Ha, Tae-hyeun, Suwon-si, Gyeonggi-do (KR); Seo, Je-hwan, Daegu (KR)
(74) Representative: Hewett, Jonathan Michael Richard

(57) **Abstract**

A display apparatus and a method of controlling the display apparatus are provided. The display apparatus is controlled through a remote control device and operates with an eyeglass apparatus. The display apparatus includes: a display which alternately displays a plurality of content views; a communicator which communicates with the eyeglass apparatus to transmit a sync signal corresponding to one of the plurality of content views to the eyeglass apparatus; a control command receiver which receives a control command to control operation states of the plurality of content views from the remote control device; and a controller which, if the control command to control an operation state of another content view is received, except a content view synchronized with the eyeglass apparatus, controls the display to display a user interface (UI) including information related to the control command at a display timing of the content view.

## Description

The present invention relates to providing a display apparatus, and a method of controlling the display apparatus. More particularly, exemplary embodiments of the present invention relate to providing a display apparatus with different contents to a plurality of users, and a method of controlling the display apparatus.

The development of electronic technology has brought various types of electronic products. In particular, various types of related art display apparatuses, such as a TV, a portable phone, a personal computer (PC), a notebook PC, a personal digital assistant (PDA), etc., have been used in most homes.

User needs for various functions have increased with various types of related art display apparatuses. Therefore, manufacturers have released related art products having functions of providing 3-dimensional (3D) contents, etc., to meet the needs of the users.

Manufacturers have attempted to develop a display apparatus which simultaneously provides a plurality of contents to a plurality of users to allow the plurality of users to view different contents. In particular, a related art method has been developed for synchronizing an eyeglass apparatus with one of the plurality of contents displayed on the display apparatus in order to provide a particular content to a user wearing the eyeglass apparatus.

In the related art display apparatus, the user changes a content that the user is viewing, or adjusts a volume, through a remote controller. Further, in the related art, an operation state of a content, synchronizing with another eyeglass apparatus, is changed according to a setting state of the remote controller. Thus, in the related art, viewing of another user is hindered.

Accordingly, a method is required which reduces a hindrance to viewing another user, which may occur regardless of a user intention.

Exemplary embodiments of the present invention may provide a display apparatus which provides a user with information about a content view controlled by a remote controller, when providing a plurality of users with different contents using eyeglass apparatuses operating with the display apparatus, and a method of controlling the display apparatus.

According to an aspect of the exemplary embodiments, there is provided a display apparatus which is controlled through a remote control device and operates with an eyeglass apparatus. The display apparatus may include: a display which alternately displays a plurality of content views; a communicator which communicates with the eyeglass apparatus to transmit a sync signal corresponding to one of the plurality of content views to the eyeglass apparatus; a control command receiver which receives a control command to control operation states of the plurality of content views from the remote control device; and a controller which, if the control command to control an operation state of another content view is received, except a content view synchronized with the eyeglass apparatus, controls the display to display a user interface (UI) including information related to the control command at a display timing of the content view.

The information related to the control command may include at least one of information about the operation state of the another content view based on the control command, and information indicating that the operation state of the content view is uncontrollable, according to the control command.

The controller may display the information about the operation state of the content view synchronized with the eyeglass apparatus along with the information about the operation state of the another content view.

The controller may enable the information about the operation state of the another content view, and disable the information about the operation state of the content view synchronized with the eyeglass apparatus.

At a display timing of the another content view, the controller may enable the information about the operation state of the another content view and disable the information about the operation state of the content view synchronized with the eyeglass apparatus.

The controller may display each of the information about the operation state of the another content view and the information about the operation state of the content view synchronized with the eyeglass apparatus along with identification information corresponding to each content view.

The controller may arrange and display the information about the operation state of the another content view under the information about the operation state of the content view synchronized with the eyeglass apparatus.

The controller may arrange the information about the operation state of the content view synchronized with the eyeglass apparatus under the information about the operation state of the another content view to display the information about the operation state of the content view at a display timing of the another content view.

According to another aspect of the exemplary embodiments, there is provided a method of controlling a display apparatus which is controlled through a remote control device and operates with an eyeglass apparatus. The method may include: alternately displaying a plurality of content views; communicating with the eyeglass apparatus to transmit a sync signal corresponding to one of the plurality of content views to the eyeglass apparatus; receiving a control command to control operation states of the plurality of content views from the remote control device; and displaying a user interface (UI) including information related to the control command at a display timing of the content view if the control command to control an operation state of another content view is received, except a content view synchronized with the eyeglass apparatus.

The information related to the control command may include at least one of information about the operation state of the another content view based on the control command, and information indicating that the operation state of the content view is uncontrollable, according to the control command.

The information about the operation state of the content view synchronized with the eyeglass apparatus may be displayed along with the information about the operation state of the another content view.

The information about the operation state of the another content view may be enabled, and the information about the operation state of the content view synchronized with the eyeglass apparatus may be disabled.

At a display timing of the another content view, the information about the operation state of the another content view may be enabled, and the information about the operation state of the content view synchronized with the eyeglass apparatus may be disabled.

Each of the information about the operation state of the another content view and the information about the operation state of the content view synchronized with the eyeglass apparatus may be displayed along with identification information corresponding to each content view.

The information about the operation state of the another content view may be arranged and displayed under the information about the operation state of the content view synchronized with the eyeglass apparatus.

The information about the operation state of the content view synchronized with the eyeglass apparatus may be arranged under the information about the operation state of the another content view to display the information about the operation state of the content view at a display timing of the another content view.

According to another aspect of the exemplary embodiments, there is provided a display apparatus which operates with a first eyeglass apparatus and a second eyeglass apparatus. The display apparatus may include a display which alternately displays a first content and a second content through a first content view and a second content view; a communicator which transmits a first sync signal to the first eyeglass apparatus, corresponding to the first content view, and transmits a second sync signal to the second eyeglass apparatus, corresponding to the second content view; a control command receiver which receives a control command to control a first operation state of the first content view and a second operation state of the second content view; and a controller which, if the control command to control the second operation state of the second content view is received, except the first content view synchronized with the first eyeglass apparatus, controls the display to display a user interface (UI) including information related to the control command at a display timing of the first control view. According to various exemplary embodiments, a user may recognize a content view controlled through a remote controller. Therefore, a hindrance to viewing another user, which may inadvertently occur, may be minimized.

The above and/or other aspects will be more apparent by describing certain exemplary embodiments with reference to the accompanying drawings, in which:
FIG. 1 is a view illustrating a display system according to an exemplary embodiment;
FIG. 2 is a block diagram illustrating a structure of a display apparatus according to an exemplary embodiment;
FIG. 3 is a block diagram illustrating a detailed structure of a display apparatus according to an exemplary embodiment;
FIG. 4 is a block diagram illustrating a detailed structure of a signal processor according to an exemplary embodiment;
FIG. 5 is a block diagram illustrating a structure of an eyeglass apparatus according to an exemplary embodiment;
FIGS. 6 through 10 are views illustrating user interface (UI) screens displayed on a display apparatus according to various exemplary embodiments; and
FIG. 11 is a flowchart illustrating a method of controlling a display apparatus according to an exemplary embodiment.

Exemplary embodiments are described in detail with reference to the accompanying drawings.

In the following description, the same drawing reference numerals are used for the same elements, even in different drawings. The matters defined in the description, such as detailed construction and elements, are provided to assist in a comprehensive understanding of the exemplary embodiments. In other words, it is apparent that the exemplary embodiments can be carried out without the specifically defined matters. Also, well-known functions or constructions are not described in detail since they would obscure the exemplary embodiments with unnecessary detail.

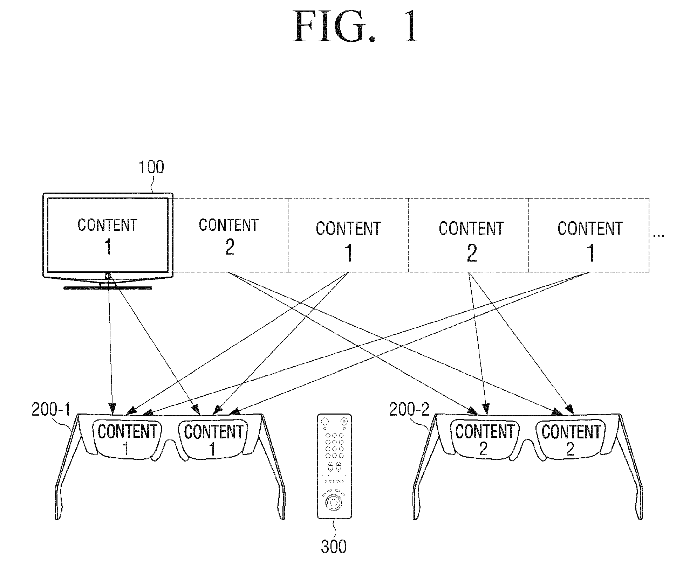

FIG. 1 is a view illustrating a display system according to an exemplary embodiment. Referring to FIG. 1, the display system includes a display apparatus 100, first and second glasses or "eyeglass apparatuses" 200-1 and 200-2, and a remote control device 300.

The display apparatus 100 alternately displays a plurality of contents through a plurality of content views. The display apparatus 100 transmits a sync signal, synchronizing with timings, when the contents are respectively displayed on the content views, to the first and second eyeglass apparatuses 200-1 and 200-2.

In this case, according to the sync signal, the first eyeglass apparatus 200-1 opens both left and right shutter glasses when a first content is displayed, and closes both the left and right shutter glasses when a second content is displayed. Therefore, a user wearing the first eyeglass apparatus 200-1 views only the first content, of the plurality of alternately displayed contents synchronizing with the first eyeglass apparatus 200-1. According to a similar method, a user wearing the second eyeglass apparatus 200-2 views only the second content.

A content view refers to a set of image frames of a content that a user wearing an eyeglass apparatus views, when image frames of each content are alternately displayed. For example, it is assumed that the user wears an eyeglass apparatus synchronizing with a particular content view, and changes a channel or plays another content when the user views the first content. In this case, a content displayed through a content view synchronizing with an eyeglass apparatus is changed from the first content to a third content, but the content view is not changed. The eyeglass apparatus operates at a timing when the content view is displayed. Thus, the user wearing the eyeglass apparatus views the third content. In other words, the content view is a super ordinate concept of a content, and is a similar concept to a screen that the user views.

As shown in FIG. 1, the display apparatus 100 may be realized as a TV, but is not limited. Therefore, the display apparatus 100 may be realized as various types of apparatuses including display units, such as a portable phone, a PDA, a notebook PC, a monitor, an e-book, an e-frame, a kiosk PC, etc.

The remote control device 300 controls an operation of the display apparatus 100. As shown in FIG. 1, the remote control device 300 performing this function may be realized as a remote controller.

The plurality of contents are 2-dimensional (2D) contents in the above-described exemplary embodiment, but this is only an exemplary embodiment. In other words, the display apparatus 100 may alternately display a plurality of 3D contents through a plurality of content views, and transmit a sync signal synchronizing with timings when the 3D contents are displayed on the 3D content views, to the first and second eyeglass apparatuses 200-1 and 200-2.

For example, the display apparatus 100 alternately displays left and right eye image frames of a first 3D content and left and right eye image frames of a second 3D content. In this case, according to the sync signal, the first eyeglass apparatus 200-1 opens left and right eye glasses at a timing when the left and right eye image frames of the first 3D content are displayed and closes the left and right eye glasses at a timing when the left and right eye image frames of the second 3D content are displayed. Therefore, the user wearing the first eyeglass apparatus 200-1 views only the first 3D content. According to a similar method, the user wearing the second eyeglass apparatus 200-2 views only the second 3D content.

Also, a shutter glass method is used in the above-described exemplary embodiment. In a polarization method, polarization directions of a plurality of content images correspond to polarization directions of the first and second eyeglass apparatuses 200-1 and 200-2 to support a multi-view mode.

Two eyeglass apparatuses 200-1 and 200-2 operate along with the display apparatus 100 in FIG. 1, but this is only an exemplary embodiment. Therefore, three or more eyeglass apparatuses may operate along with the display apparatus 100. In other words, the display apparatus 100 may transmit a sync signal, which synchronizes eyeglass apparatuses with timings when a plurality of contents are displayed through a plurality of content views, to the eyeglass apparatuses to realize a multi-view mode. The display apparatus 100 may allow polarization directions of a plurality of content images to correspond to polarization directions first, second, ... eyeglass apparatuses in order to allow users to view different types of contents through three or more eyeglass apparatuses, according to a polarization method.

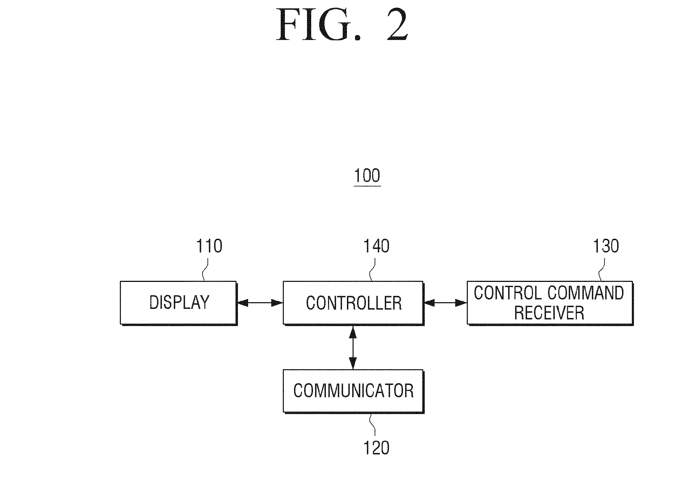

FIG. 2 is a block diagram illustrating a structure of a display apparatus 100 according to an exemplary embodiment. Referring to FIG. 2, the display apparatus 100 includes a display 110, a communicator 120, a control command receiver 130, and a controller 140. The display apparatus 100 is controlled through the remote control device 300, and operates along with the first and second eyeglasses 200-1 and 200-2.

The display 110 alternately displays a plurality of content views. In detail, the display 110 alternately displays a plurality of contents through the plurality of content views. For example, the display 110 displays a first image frame of a first content, a first image frame of a second content, a second image frame of the first content, a second image frame of the second content, ... through the content views.

For this purpose, the display 110 may be realized as a liquid crystal display panel (LCDP), an organic light-emitting diode (OLED), etc., but is not limited to this.

The communicator 120 communicates with eyeglass apparatuses to transmit a sync signal corresponding to one of the plurality of content views. In other words, the communicator 120 synchronizes the eyeglass apparatuses with timings, when the plurality of contents are alternately displayed on the content views, to transmit the sync signal to the eyeglass apparatuses.

For example, as shown in FIG. 1, if two contents are alternately displayed, the communicator 120 transmits a sync signal to the first eyeglass apparatus 200-1, which synchronizes the first eyeglass apparatus 200-1 with a timing when the first content is displayed through the first content view. Also, the communicator 120 transmits a sync signal to the second eyeglass apparatus 200-2, which synchronizes the second eyeglass apparatus 200-2 with a timing when the second content is displayed through the second content view.

Therefore, an eyeglass apparatus opens left and right shutter glasses at a timing when one of the content views alternately displayed on the display 110 and synchronized with the eyeglass apparatus is displayed, and closes the left and right shutter glasses at a timing when another content view is displayed. As a result, a user wearing the eyeglass apparatus only views one of the plurality of contents alternately displayed on the display 110, and synchronized with the eyeglass apparatus.

The communicator 120 transmits audio corresponding to the contents to the eyeglass apparatuses. In other words, the communicator 120 transmits audio, of the contents alternately displayed on the display 110, to the eyeglass apparatuses. For example, as shown in FIG. 1, if two contents are alternately displayed through content views, the communicator 120 transmits an audio of the first content to the first eyeglass apparatus 200-1 and transmits an audio of the second content to the second eyeglass apparatus 200-2.

The communicator 120 communicates with the eyeglass apparatuses according to various wireless communication methods. For example, the communicator 120 may include a Bluetooth communication module. In this case, the communicator 120 may transmit a sync signal and an audio in transmission packet formats defined in a Bluetooth communication protocol to the eyeglass apparatuses. The communicator 120 communicates with the eyeglass apparatuses by using a frequency band (e.g., Industrial Scientific Medical (ISM) band of 2.4 GHz) defined in the Bluetooth communication protocol.

The communicator 120 may communicate with a plurality of eyeglass apparatuses through one Bluetooth communication module, or may include a plurality of Bluetooth communication modules to communicate with the plurality of eyeglass apparatuses using the plurality of Bluetooth communication modules.

The display apparatus 100 communicates with the eyeglass apparatuses according to the Bluetooth communication method in the above-described exemplary embodiment, but this is only an exemplary embodiment. In other words, the display apparatus 100 may communication with the eyeglass apparatuses using various wireless communication methods, such as Zigbee, WiFi (e.g., WiFi Direct), Infrared Data Association (IRDA), radio frequency (RF), etc.. Also, the display apparatus 100 may communicate with the eyeglass apparatuses, according to various wireless communication methods of forming a communication channel in a near field, to transmit and receive a signal.

For example, the communicator 120 transmits a sync signal to the eyeglass apparatuses by using the Bluetooth communication method, and transmits an audio signal to the eyeglass apparatuses through an additional RF channel. In this case, the communicator 120 transmits an audio signal to the first eyeglass apparatus 200-1 through a preset first frequency band of a frequency band used in an RF communication, and transmits an audio signal to the second eyeglass apparatus 200-2 through a preset second frequency band of the frequency band.

The control command receiver 130 receives various types of control commands to control an operation of the display apparatus 100 from the remote control device 300. For example, the control command receiver 130 may be realized as an IR receiver to receive an IR control command. However, this is only an exemplary embodiment. Thus, the control command receiver 130 may receive a control command from the remote control device 300 by using various communication methods, such as WiFi, Bluetooth, Zigbee, etc.

In particular, the control command receiver 130 receives a control command to control operation states of a plurality of content views from the remote control device 300. The operation states include channels receiving contents displayed through content views, volumes of the contents, etc.

The controller 140 controls an overall operation of the display apparatus 100. The controller 140 controls the communicator 120 to communicate with the eyeglass apparatuses. Hereinafter, it will be assumed that the communicator 120 includes a Bluetooth communication module, and communicates with the eyeglass apparatuses by using Bluetooth communication modules of the eyeglass apparatuses and a Bluetooth communication protocol.

An eyeglass apparatus broadcasts an inquiry message to search for the display apparatus 100, positioned within a range in which a Bluetooth communication is possible, in order to perform a pairing operation. If the inquiry message is received, the controller 140 controls the communicator 120 to transmit an extended inquiry response (EIR) to the inquiry message to the eyeglass apparatus. The EIR may include a Bluetooth device address, an apparatus name, a class of device (COD), clock information, etc.

If the eyeglass apparatus receives the EIR, the eyeglass apparatus transmits a transmission packet including a Bluetooth device address, an apparatus type, etc., to the display apparatus 100. If the controller 140 receives the transmission packet through the communicator 120, the controller 140 controls the communicator 120 to transmit and receive a PIN code with the eyeglass apparatus, in order to perform a pairing operation with the eyeglass apparatus. Although a user does not directly input the PIN code, the controller 140 automatically inputs the PIN code to register the display apparatus 100 in order to perform the pairing operation. However, the exemplary embodiments are not limited. Thus, the controller 140 may perform a pairing process through a method by which a user directly inputs a PIN code of a display apparatus.

In this method, the controller 140 controls the communicator 120 to be in a state communicable with the eyeglass apparatus. However, this is only an exemplary embodiment. The controller 140 may control the communicator 120 to be in a state communicable with the eyeglass apparatus through various methods used in a Bluetooth communication protocol.

The communicator 120 may have a plurality of Bluetooth device addresses, and one eyeglass apparatus may be connected to one Bluetooth device address. The controller 140 may allocate Bluetooth device addresses to eyeglass apparatuses according to an order of the eyeglass apparatuses connected to the communicator 120.

If pairing is completed, information about the eyeglass apparatus, e.g., identification information of the eyeglass apparatus or information about a Bluetooth device address used for pairing, may be registered in the communicator 120. Therefore, the controller 140 may match information about each eyeglass apparatus with a transmission packet corresponding to a display timing of each content, and transmit each transmission packet to each eyeglass apparatus based on information acquired through pairing.

The controller 140 controls elements of the display apparatus 100 according to the control command received from the remote control device 300.

The controller 140 controls an operation state of each content view based on a control command received from the remote control device 300. The operation state of each content view may include a change of a channel receiving a content displayed through each content view, a change of a volume of the content, etc.

For example, as shown in FIG. 1, if a control command to change a channel of the first content view displaying the first content is received from the remote control device 300, the controller 140 may display a content received through the changed channel through the first content view, based on the control command.

As another example, if a control command to change a volume of the first content view displaying the first content is received from the remote control device 300, the controller 140 may change a volume of a content, displayed through the first content view, based on the control command.

The remote control device 300 transmits information about a setting authority to the display apparatus 100. The setting authority refers to an authority over a content view, controllable through the remote control device 300, and may be set by the user through the remote control device 300.

The controller 140 may control an operation state of each content view, based on the information about the setting authority received from the remote control device 300.

The controller 140 determines one of a plurality of content views controlled by the remote control device 300 based on the information about the setting authority, and controls an operation state of the determined content view based on a control command received from the remote control device 300. The controller 140 may control the operation state of the determined content view according to a previously received setting authority, until receiving information about another setting authority after the information about the setting authority, is received.

For example, if the remote control device 300 is set to control an operation state of the first content displaying the first content in FIG. 1, the remote control device 300 may transmit information, indicating that the remote control device 300 is set to control the operation state of the first content view, to the display apparatus 100.

Therefore, the controller 140 may determine a control object of the remote control device 300 as the first content view based on the information about the setting authority received from the remote control device 300, and control the operation state of the first content view according to a control command received from the remote control device 300.

If the setting authority is changed to the second content view displaying the second content, the remote control device 300 may transmit information, indicating that the remote control device 300 is set to control an operation state of the second content view, to the display apparatus 100. Therefore, the controller 140 may determine the control object of the remote control device 300 as the second content view based on the information about the setting authority received from the remote control device 300, and control the operation state of the second content view according to a control command received from the remote control device 300.

As described above, the controller 140 controls an operation of each content view based on the information about the setting authority received from the remote control device 300. Therefore, a plurality of users may control operation states of content views displaying contents that the plurality of users view, by using one remote control device 300.

In the above-described exemplary embodiment, a user viewing a first content may control the remote control device 300 whose setting authority is set to a second content view. In this case, a channel or a volume of the second content view may be changed. However, the user viewing the first content wears an eyeglass apparatus which synchronizes with a display timing of a first content view. Thus, the user viewing the first content does not recognize that an operation state of the second content view is changed.

As described above, a user may inadvertently hinder viewing of another user. Therefore, according to the exemplary embodiments, the user may recognize and minimize the viewing hindrance, which may occur to another user.

If a control command to control an operation state of another content view is received, except for a content view synchronizing with an eyeglass apparatus, the controller 140 controls the display 110 to display a user interface (UI) including information related to the control command at a display timing of the content view. In this case, the controller 140 overlaps the information related to the control command with the content displayed through the content view synchronizing with the eyeglass apparatus, and displays the content overlapping with the information.

For example, in FIG. 1, a user, who wears an eyeglass apparatus which synchronizes with the first content view displaying the first content, views the first content. The controller 140 determines that a control command to control the operation state of the second content view displaying the second content is received, the controller 140 overlaps information related to the control command with the first content, and displays the first content overlapping with the information through the first content view. Therefore, the controller 140 informs the user viewing the first content that a control command to control the second content view is received.

The information related to the control command may include one of information about an operation state of another content view based on the control command and information indicating that the operation state of the content view is uncontrollable according to the control command.

The information about the operation of the another content view may include at least one of information about a channel changed according to the control command and information about a volume. In other words, the controller 140 may change the operation state of the another content view based on the control command and display information about the changed channel and volume through a content view.

The information indicating that the operation state of the content view is uncontrollable according to the control command may include a message indicating that the operation state of the content view is uncontrollable according to the control command.

The controller 140 displays information about an operation state of the content view which synchronizes with the eyeglass apparatus, along with the information about the operation state of the another content view. The information about the operation state of the content view may include at least one of information about a channel of the content view, and information about a volume of the content view.

For example, as shown in FIG. 1, if it is determined that a control command to control the operation state of the second content view displaying the second content is received, the controller 140 may display an operation state of each content view through the first content view displaying the first content. In other words, the controller 140 may overlap information about the operation state of the first content view and information about the operation state of the second content view with the first content, and display the first content overlapping with the information about the operation states of the first and second content views.

In this case, the controller 140 may enable the information about the operation state of the another content view, and disable the information about the operation state of the content view synchronizing with the eyeglass apparatus. In other words, the controller 140 highlights the information about the operation state of the another content view controlled according to the control command at a display timing of the content view which synchronizes with the eyeglass apparatus, and displays information to the user about a content view that is a control object of the remote control device 300.

For example, in FIG. 1, it is assumed that the second content view displaying the second content is set to a control object of the remote control device 300. In this case, the controller 140 overlaps the information about the operation states of the first and second content views with the first content, and highlights the information about the operation state of the second content view.

However, a content view is set to a control object of the remote control device 300 through enabling and/or disabling in the above-described exemplary embodiment. However, this is only an exemplary embodiment. Therefore, the controller 140 may change a font, a color, a size, etc., to display information about a content view that is a control object of the remote control device 300, different from information about another content view.

The controller 140 enables the information about the operation state of the another content view at a display timing of the another content view, and disables the information about the content view synchronizing with the eyeglass apparatus.

For example, it is assumed that the second content view displaying the second content is set to a control object of the remote control device 300. In this case, the controller 140 overlaps the information about the operation states of the first and second content views with the second content, and highlights the information about the operation state of the second content view.

The controller 140 displays that information about an operation state of each content view, through various methods.

The controller 140 displays the information about the operation state of the another content view and the information about the operation state of the content view which synchronizes with the eyeglass apparatus, along with identification information corresponding to each content view. The identification information may be numbers, letters, etc., for distinguishing content views from one other.

For example, in FIG. 1, the controller 140 adds a first user to the information about the operation state of the first content view, adds a second user to the information about the operation state of the second content view, and overlaps information about an operation state of each content view to which identification information is added, with the first and second contents.

The controller 140 displays the information about the operation state of the another content view under the information about the operation state of the content view which is synchronized with the eyeglass apparatus. The controller 140 displays the information about the operation state of the content view which is synchronized with the eyeglass apparatus under the information about the operation state of the another content view at a display timing of the another content view.

In other words, the controller 140 controls to display information about an operation state of a content view which displays a content that each user views, and above information about an operation state of another content view.

For example, in FIG. 1, the controller 140 arranges the information about the operation state of the first content view above the information about the operation state of the second content view to overlap the information about the operation state of the first content view with the first content. Also, the controller 140 arranges the information about the operation state of the second content view above the information about the operation state of the first content view to overlap the information about the operation state of the second content view with the second content.

In the above-described exemplary embodiment, information about a content view set to a control object of the remote control device 300 and information about another content view are displayed at a display timing of the content view set to the control object. However, this is only an exemplary embodiment. Thus, the controller 140 may display only the information about the content view set to the control object at the display timing of the content view set to the control object.

For example, in FIG. 1, it is assumed that the second content view displaying the second content is set to a control object of the remote control device 300. In this case, the controller 140 may overlap only the information about the operation state of the second content view with the second content.

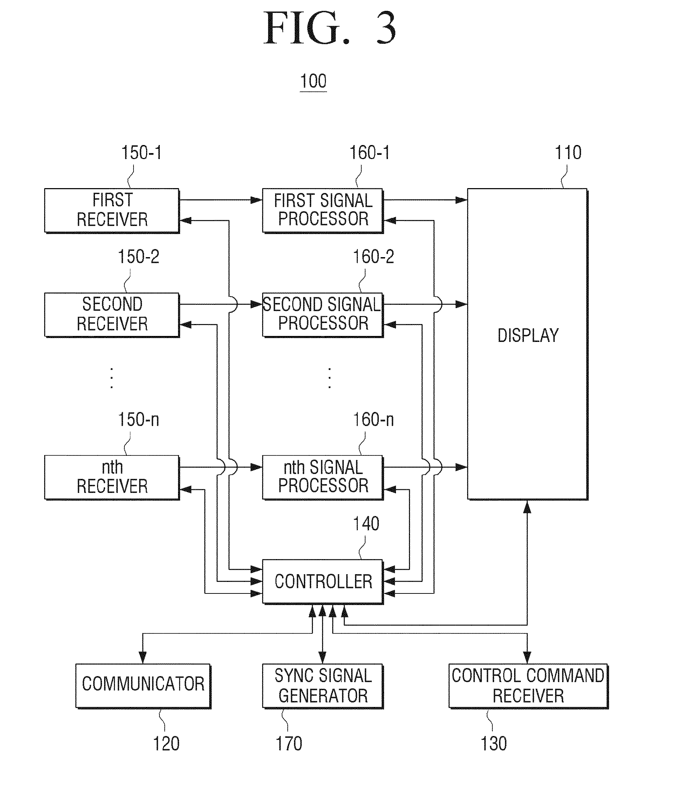

FIG. 3 is a block diagram illustrating a detailed structure of a display apparatus 100 according to an exemplary embodiment. Referring to FIG. 3, the display apparatus 100 includes a display 110, a communicator 120, a control command receiver 130, a controller 140, a plurality of receivers 150-1, 150-2, ..., and 150-n, a plurality of signal processors 160-1, 160-2, ..., and 160-n, and a sync signal generator 170. Elements of FIG. 3 having the same reference numerals as those of FIG. 2 perform the same functions as those of FIG. 2. Thus, their repeated descriptions will be omitted herein.

The plurality of receivers 150-1, 150-2, ..., and 150-n receive different contents. The plurality of receivers 150-1, 150-2, ..., and 150-n receive contents from a broadcasting station transmitting broadcast program contents by using a broadcast network, or from a web server transmitting content files by using the Internet. The plurality of receivers 150-1, 150-2, ..., and 150-n may receive contents from various types of recording media players installed in or connected to the display apparatus 100. A recording media player refers to an apparatus which plays contents stored on various types of recording media, such as a CD, a DVD, a hard disk, a Blue-ray disk, a memory card, a universal serial bus (USB) memory, etc.

If the plurality of receivers 150-1, 150-2, ..., and 150-n receive the contents from the broadcasting station, the plurality of receivers 150-1, 150-2, ..., and 150-n may be realized to include elements such as tuners (not shown), demodulators (not shown), equalizers (not shown), etc. If the plurality of receivers 150-1, 150-2, ..., and 150-n receive the contents from a source such as the web server, the plurality of receivers 150-1, 150-2, ..., and 150-n may be realized as network interface cards (not shown). If the plurality of receivers 150-1, 150-2, ..., and 150-n receive the contents from the various types of recording media players described above, the plurality of receivers 150-1, 150-2, ..., and 150-n may be realized as interfaces (not shown) connected to the recording media players. As described above, the plurality of receivers 150-1, 150-2, ..., and 150-n may be realized as various types.

The plurality of receivers 150-1, 150-2, ..., and 150-n do not need to receive the contents from the same type of source. Thus, the plurality of receivers 150-1, 150-2, ..., and 150-n may receive the contents from different types of sources. For example, the first receiver 150-1 may be realized to include a tuner, a demodulator, an equalizer, etc., and the second receiver 150-2 may be realized as a network interface card.

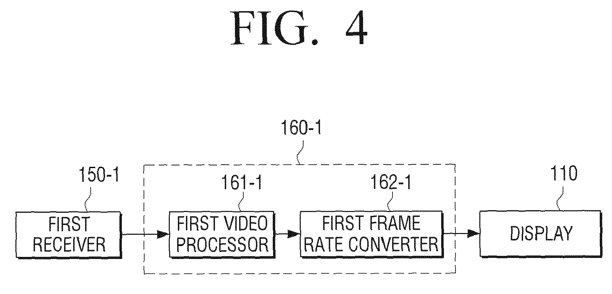

The plurality of signal processors 160-1, 160-2, ..., and 160-n process the contents received through the plurality of receivers 150-1, 150-2, ..., and 150-n to form image frames. A signal processor will now be described in more detail with reference to FIG. 4.

FIG. 4 is a block diagram illustrating a detailed structure of a first signal processor 160-1 according to an exemplary embodiment. Referring to FIG. 4, the first signal processor 160-1 includes a first video processor 161-1 and a first frame rate converter 162-1. Although one signal processor 160-1 is illustrated in FIG. 4, the other signal processors 160-2, ..., and 160-n may be realized in the same structures as the structure of FIG. 4.

The first video processor 161-1 performs signal-processing with respect to video data of a content received from the first receiver 150-1. The first video processor 161-1 may include a decoder (not shown) which decodes the video data and a scaler (not shown) which performs upscaling or downscaling according to a screen size of the display 110.

The first video processor 161-1 converts the video data in a data format corresponding to the first frame rate converter 162-1. If input video data has a top-to-bottom format, but the first frame rate converter 162-1 processes a frame in a side-by-side format, the first video processor 161-1 connects image frames of contents side by side in a horizontal direction to convert the image frames in a side-by-side format.

The first frame rate converter 162-1 converts a frame rate of a content provided from the first video processor 161-1 with reference to an output rate of the display apparatus 100. For example, in a National Television System Committee (NTSC) method, a frame rate displayable in the display apparatus 100 may be 60 frames per second. Therefore, the first frame rate converter 162-1 converts the frame rate of each content to 60 Hz.

The display 110 alternately arranges and displays the image frames of the contents formed by the plurality of signal processors 160-1, 160-2, ..., and 160-n. The display 110 multiplexes the image frames of the contents provided from the plurality of signal processors 160-1, 160-2, ..., and 160-n to alternately arrange the image frames at least one by one in order to display the image frames through content views. The display 110 may perform upscaling or downscaling with respect to the image frames of each content according to the screen size.

For example, the display 110 alternately arranges and displays an image frame of a first content, an image frame of a second content, ..., and an image frame of an nth content at least one by one. In this case, since each of the contents is converted to have 60 frames per second, the display 110 displays image frames of a plurality of contents alternately arranged in a driving frequency of n×60 Hz.

A user wears an eyeglass apparatus operating at a timing when contents are displayed through content views on the display 110 to view a desired content. The eyeglass apparatus includes left and right shutter glasses. The left and right shutter glasses are alternately opened and/or closed when the user views a 3D content. However, if image frames of contents are alternately displayed at least one by one, the eyeglass apparatus simultaneously opens the left and right shutter glasses when a content synchronizing with the eyeglass is displayed, and simultaneously closes the left and right shutter glasses when a content that does not synchronize with the eyeglass apparatus is displayed. Therefore, the user views a content separately from another user.

As described above, a mode in which image frames of contents are alternately arranged and displayed may be referred to as a multi-view mode (or a dual view mode). If the display apparatus 100 operates in a general mode for displaying only one of a 2D content and a 3D content, the display apparatus 100 enables only one of the plurality of receivers 150-1, 150-2, ..., and 150-n to process a content. If the user selects the multi-view mode when the display apparatus 100 operates in the general mode, the display apparatus 100 enables the other receivers to process data according to the above-described method.

The above-described content may be a 2D content or a 3D content. The 3D content refers to a content which allows the user to feel a stereoscopic effect by using a multi-view image in which the same object is expressed on different views.

If a plurality of 3D contents are used, the display 110 multiplexes left and right eye images of 3D contents provided from the plurality of frame rate converters 162-1, 162-2, ..., and 162-n in preset arrangement formats, and alternately arranges the left and right eye images with image frames of other contents.

The display 110 sequentially arranges and displays left and right eye images of a first content, left and right eye images of a second content, ..., and left and right eye images of an nth content, and the user recognizes left and right eye images of one 3D content through the eyeglass apparatus.

In the general mode (in particular, if a 3D content is displayed), if a 3D content is received through the enabled first receiver 150-1 of the plurality of receivers 150-1, 150-2, ..., and 150-n, the first signal processor 160-1 performs signal-processing with respect to left and right eye images of the 3D content.

The display 110 alternately arranges and displays left and right eye image frames of the 3D content processed by the first signal processor 160-1. In other words, the display 110 alternately displays the 3D content in a time order of "left eye image frame -> right eye image frame -> left eye image frame -> right eye image frame ->...". If a frame rate displayable in the display apparatus 100 is 60 frames per second according to the NTSC method, the first frame rate converter 162-1 of the first signal processor 160-1 converts frame rates of the left and right eye images of the 3D content to 60 frames per second. The display 110 displays the left and right eye image frames of the 3D content alternately arranged in a driving frequency of 120 Hz.

Operations of the display 110 and the signal processors 160-1, ..., and 160-n may be controlled by the controller 140.

The sync signal generator 170 generates a sync signal which synchronizes the eyeglass apparatus with timings when contents are displayed on content views. In the multi-view mode, the sync signal generator 170 generates a sync signal which synchronizes the eyeglass apparatus with display timings of image frames displayed through content views. Also, in the general mode, the sync signal generator 170 generates a sync signal which synchronizes the eyeglass apparatus with display timings of left and right eye image frames of a 3D content.

The communicator 120 transmits a sync signal corresponding to the eyeglass apparatus and an audio of a content to the eyeglass apparatus. For example, the communicator 120 generates a transmission packet according to a Bluetooth communication protocol to transmit the sync signal and the audio to the eyeglass apparatus. A process of connecting the communicator 120 to the eyeglass apparatus according to the Bluetooth communication protocol is as described with reference to FIG. 2. Thus, repeated description will be omitted herein.

The transmission packet may include the sync signal. In other words, the transmission packet may include time information which synchronizes with a display timing of a content to open and/or close the left and right shutter glasses of the eyeglass apparatus. The time information includes information about a left shutter open offset for opening the left shutter glass of the eyeglass apparatus, a left shutter close offset for closing the left shutter glass, a right shutter open offset for opening the right shutter glass, and a right shutter close offset for closing the right shutter glass.

An offset time is delay information from a reference time set with respect to each content to an opening or closing time of shutter glasses. Therefore, the eyeglass apparatus opens or closes the left and right shutter glasses when the offset time elapses from the reference time.

For example, the reference time may be a time when a vertical sync signal (i.e., a frame sync) is generated from an image frame of a content, and information about the reference time may be included in the transmission packet. The transmission packet may also include information about a clock signal used in the display apparatus 100. Therefore, if the eyeglass apparatus receives the transmission packet, the eyeglass apparatus synchronizes a clock signal with the clock signal of the display apparatus 100, and determines whether the offset time arrives from the time when the vertical sync signal is generated, by using the clock signal to open and/or close the left and right shutter glasses. The transmission packet may further include information about a period of the frame sync, information for writing decimal point information when the period of the frame sync has a decimal point, etc.

The transmission packet may include an audio constituting each content. In other words, the controller 140 controls to transmit audio of contents displayed through content views to the eyeglass apparatus synchronized with the content views.

The controller 140 controls the communicator 120 to transmit sync signals and audio corresponding to the content views displaying the contents to the eyeglass apparatus synchronizing with the content views.

For example, as shown in FIG. 1, it is assumed that two contents are alternately displayed. In this case, the controller 140 transmits a transmission packet, which includes time information for opening and/or closing the first eyeglass apparatus 200-1 at a timing when a first content is displayed through a content view, and an audio constituting the first content, to the first eyeglass apparatus 200-1. The controller 140 transmits a transmission packet, which includes time information for opening and/or closing the second eyeglass apparatus 200-2 at a timing when a second content is displayed through a content view and an audio constituting the second content, to the eyeglass apparatus 200-2.

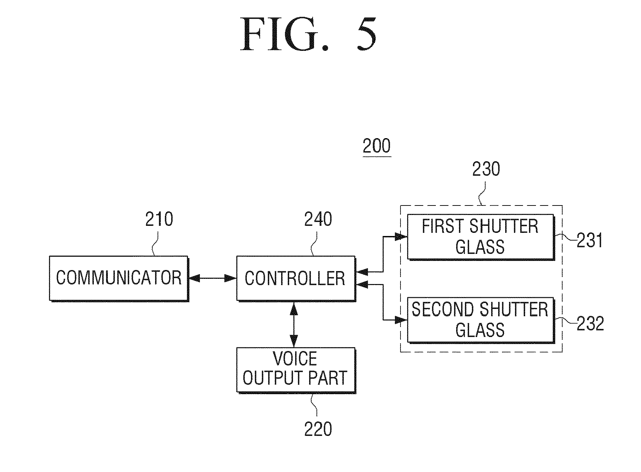

FIG. 5 is a block diagram illustrating a structure of an eyeglass apparatus 200 according to an exemplary embodiment. Referring to FIG. 5, the eyeglass apparatus 200 includes a communicator 210, a voice output part 220, a shutter glass part 230, and a controller 240. In particular, similar to the first and second eyeglass apparatuses 200-1 and 200-2 shown in FIG. 1, the eyeglass apparatus 200 operates along with the display apparatus 100 which alternately displays a plurality of content views. One eyeglass apparatus 200 is shown in FIG. 5, but another eyeglass apparatus may be realized in the same structure of that of FIG. 5.

The communicator 210 communicates with the display apparatus 100 to receive a sync signal corresponding to one of the plurality of content views. For this purpose, the communicator 210 may include a Bluetooth communication module.

In this case, the communicator 120 performs a pairing operation with a Bluetooth communication module of the display apparatus 100 to be in a state communicable with the display apparatus 100. For example, the Bluetooth communication module of the communicator 210 transmits an inquiry message to the display apparatus 100, and receives a response message from the display apparatus 100 to perform the pairing operation. This is as described above with reference to FIG. 2.

If the display apparatus 100 and the communicator 210 are in a communicable state, the communicator 120 receives a sync signal corresponding to a content displayed through a content view from the display apparatus 100. The communicator 120 receives a sync signal, which synchronizes the eyeglass apparatus 200 with a display timing of one of a plurality of alternately displayed contents, from the display apparatus 100.

The communicator 210 receives an audio corresponding to one of the plurality of contents. The communicator 210 receives an audio of one of the plurality of alternately displayed contents from the display apparatus 100.

The voice output part 220 outputs a user voice. In detail, if the user voice is received from the display apparatus 100, the controller 240 outputs the user voice through the voice output part 220. In this case, the voice output part 220 may be realized as a speaker or ear phones, and may be arranged toward both ears of the user when the user wears the eyeglass apparatus 200.

The shutter glass part 230 includes first and second shutter glasses 231 and 232. The first shutter glass 231 may be a left shutter glass, and the second shutter glass 232 may be a right shutter glass, or the first shutter glass 231 may be the right shutter glass, and the second shutter glass 232 may be the left shutter glass.

The controller 240 controls an operation of the shutter glass part 230 based on the sync signal. The controller 240 opens the first and second shutter glasses 231 and 232 at a timing when a content is displayed through a content view synchronizing with the eyeglass apparatus 200, and closes the first and second shutter glasses 231 and 232 at a timing when a content is displayed through another content view.

Since the sync signal includes time information for displaying a content through a content view synchronizing with the eyeglass apparatus 200, the controller 240 controls opening and/or closing timings of the first and second shutter glasses 231 and 232 by using the time information. In other words, the controller 240 controls the opening and/closing timings of the first and second shutter glasses 231 and 232 according to a timing when the content synchronizing with the eyeglass apparatus 200 is displayed in the display apparatus 100, based on the time information of the sync signal.

The eyeglass apparatus 200 may include a button, etc., for receiving a user control for performing the paring operation with the display apparatus 100. In this case, if the corresponding button is selected, the controller 240 controls the communicator 210 to perform a communication connection with the display apparatus 100.

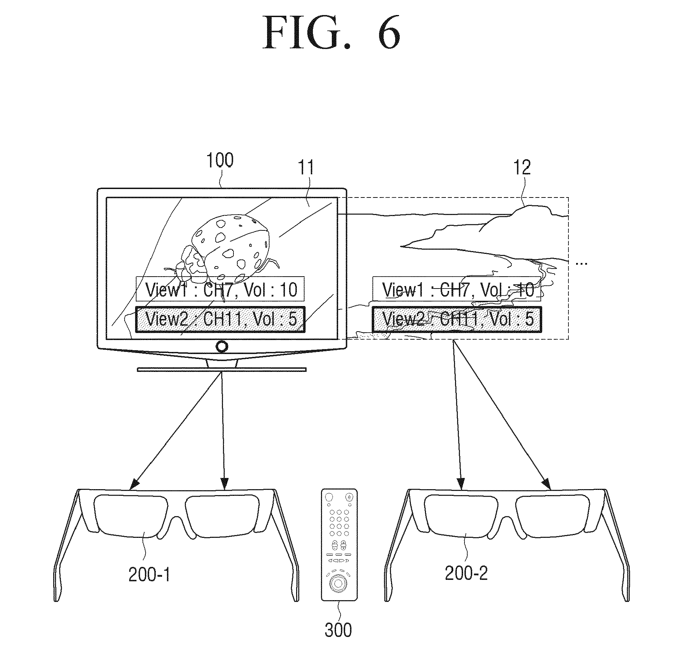

FIGS. 6 through 10 are views illustrating UI screens displayed on a display apparatus according to various exemplary embodiments.

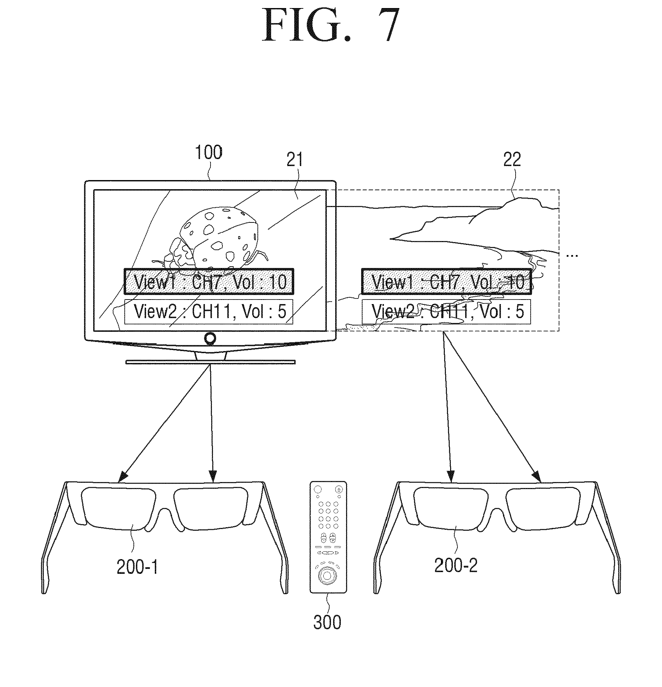

Referring to FIGS. 6 and 7, identification information is added to information about an operation state of each content view, and then displayed.

Referring to FIG. 6, if a control object of the remote control device 300 is set to a second content view which a user wearing a second eyeglass apparatus 200-2 views, a user wearing a first eyeglass apparatus 200-1 inputs a control command through the remote control device 300.

If the control command is received from the remote control device 300, the display apparatus 100 displays a first content 11 along with information about a channel and a volume of a first content view, and information about a channel and a volume of the second content view through the first content view synchronizing with the first eyeglass 200-1. First and second users are respectively added to the information, and the information about the channel and the volume of the second content view set to the control object is highlighted.

Therefore, the user inputting the control command through the remote control device 300, i.e., the user wearing the first eyeglass apparatus 200-1, recognizes that the second content view, which is synchronized with the second eyeglass apparatus 200-2, is the control object of the remote control device 300.

The display apparatus 100 displays a second content 12 along with the information about the channel and the volume of the first content view and the information about the channel and the volume of the second content view through the second content view, which is synchronized with the second eyeglass apparatus 200-2. The first and second users are added to the information, and the information about the channel and the volume of the second content view set to the control object is highlighted. Therefore, the user wearing the second eyeglass apparatus 200-2 recognizes that a command to control an operation state of the second content view that the user wearing the second eyeglass apparatus 200-2 views is input through the remote control device 300.

Referring to FIG. 7, if a control object of the remote control device 300 is set to a first content view that the user wearing the first eyeglass apparatus 200-1 views, the user wearing the second eyeglass apparatus 200-2 inputs a control command through the remote control device 300.

If the control command is received from the remote control device 300, the display apparatus 100 displays a second content 22 along with information about a channel and a volume of the first content view and information about a channel and a volume of a second content view through the second content view synchronizing with the second eyeglass apparatus 200-2. First and second users are added to the information, and the information about the channel and the volume of the first content view set to the control object is highlighted.

Therefore, the user inputting the control command through the remote control device 300, i.e., the user wearing the second eyeglass apparatus 200-2, recognizes that the control object of the remote control device 300 is the first content view which is synchronized with the first eyeglass apparatus 200-1.

The display apparatus 100 displays a first content 21 along with the information about the channel and the volume of the first content view and the information about the channel and the volume of the second content view through the first content view synchronizing with the first eyeglass apparatus 200-1. The first and second users are added to the information, and the information about the channel and the volume of the first content view set to the control object is highlighted.

Accordingly, the user wearing the first eyeglass apparatus 200-1 recognizes that a command, to control an operation state of the first content view that the user views, is input through the remote control device 300.

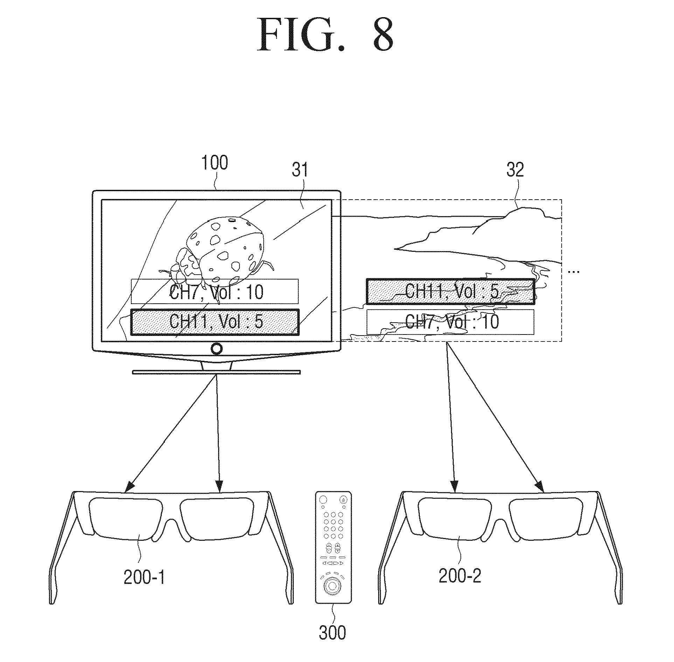

Referring to FIG. 8, information about a content view that a user views is displayed above information about another content view.

In FIG. 8, if a control object of the remote control device 300 is set to a second content view that the user wearing the second eyeglass apparatus 200-2 views, the user wearing the first eyeglass apparatus 200-1 inputs a control command through the remote control device 300.

If the control command is received from the remote control device 300, the display apparatus 100 displays a first content 31 along with information about a channel and a volume of a first content view and information about a channel and a volume of the second content view through the first content view which is synchronized with the first eyeglass apparatus 200-1. The display apparatus 100 arranges and displays the information about the channel and the volume of the first content view which is synchronized with the first eyeglass apparatus 200-1 above the information about the channel and the volume of the second content view. The display apparatus 100 highlights and displays information about the second content view, which is the control object of the remote control device 300.

Therefore, the user inputting the control command through the remote control device 300, i.e., the user wearing the first eyeglass apparatus 200-1, recognizes that the control object of the remote control device 300 is the second content view synchronizing with the second eyeglass apparatus 200-2.

The display apparatus 100 displays a second content 32 along with the information about the channel and the volume of the first content view, and the information about the channel and the volume of the second content view through the second content view which is synchronized with the second eyeglass apparatus 200-2. The display apparatus 100 arranges and displays the information about the channel and the volume of the second content view synchronizing with the second eyeglass apparatus 200-2 above the information about the channel the volume of the first content view. The display apparatus 100 highlights and displays information about the second content view that is the control object of the remote control device 300.

Therefore, the user wearing the second eyeglass apparatus 200-2 recognizes that a command to control an operation state of the second content view that the user views is input through the remote control device 300.

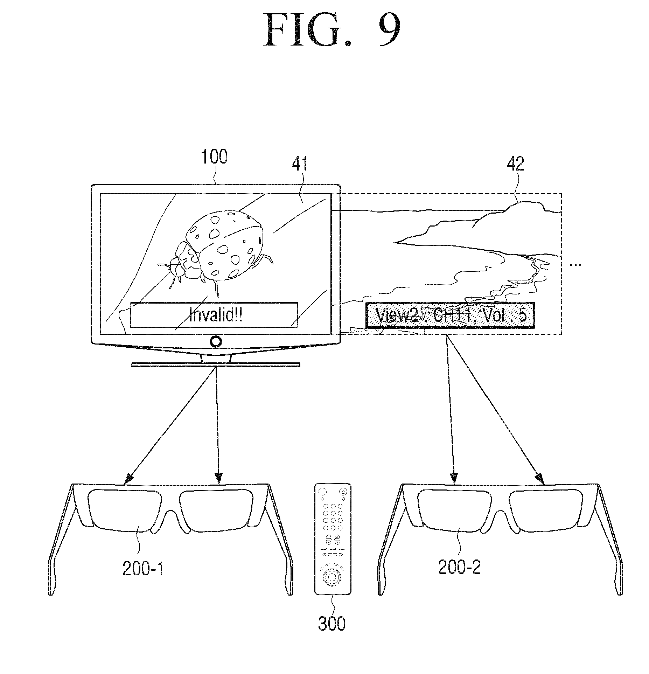

Referring to FIG. 9, information indicating that an operation state of a content view is uncontrollable is displayed.

In FIG. 9, if a control object of the remote control device 300 is set to a second content view that the user wearing the second eyeglass apparatus 200-2 views, the user wearing the first eyeglass apparatus 200-1 inputs a control command through the remote control device 300.

If the control command is received from the remote control device 300, the display apparatus 100 displays a first content 41 along with a message indicating that an operation state of a content view is uncontrollable according to the control command, through a first content view synchronizing with the first eyeglass apparatus 200-1. In other words, if it is determined that the control object of the remote control device 300 is the second content view, the display apparatus 100 displays the message indicating that the operation state of the first content view is uncontrollable, through the first content view.

Therefore, the user inputting the control command through the remote control device 300, i.e., the user wearing the first eyeglass apparatus 200-1, recognizes that the control object of the remote control device is not the first content view.

The display apparatus 100 displays a second content 42 along with information about a channel and a volume of the second content view through the second content view synchronizing with the second eyeglass apparatus 200-2. The display apparatus 100 highlights and displays the information about the channel and the volume of the second content view that is the control object.

Accordingly, the user wearing the second eyeglass apparatus 200-2 recognizes that a command to control an operation state of the second content view that the user views is input through the remote control device 300.

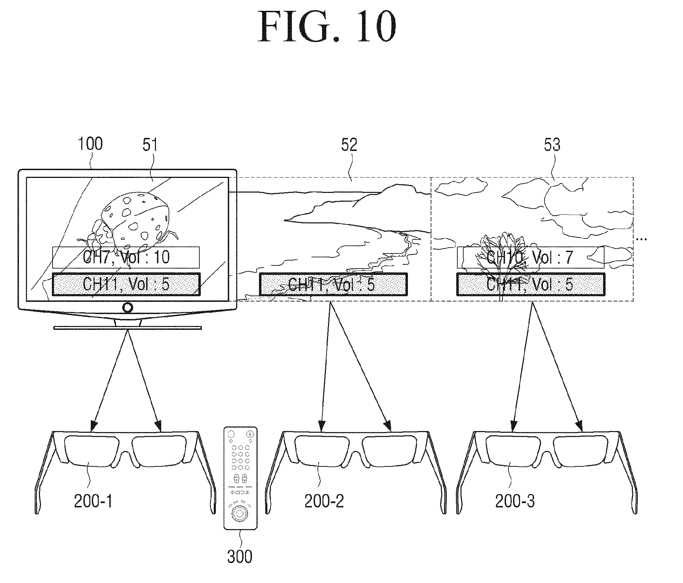

Referring to FIG. 10, only information about a content view set to a control object is displayed. As described with reference to FIG. 8, information about a content view that each user views is arranged above information about another content view, and information about a content view that is a control object of the remote control device 300 is highlighted and displayed.

In detail, the display apparatus 100 displays a first content 51, along with information about a channel and a volume of a first content view and information about a channel and a volume of a second content view through the first content view. The display apparatus 100 displays a third content 53, along with information about a channel and a volume of a third content view and the information about the channel and the volume of the second content view through the third content view.

In other words, the display apparatus 100 displays information about an operation state of a content view synchronizing with an eyeglass apparatus, and information about an operation state of a content view that is a control object of the remote control device 300.

In this case, the display apparatus 100 highlights and displays the information about the operation state of the content view that is the control object of the remote control device 300, i.e., the information about the channel and the volume of the second content view.

Therefore, a user wearing a first eyeglass apparatus 200-1 and a user wearing a third eyeglass apparatus 200-3 recognize that the control object of the remote control device 300 is the second content view synchronizing with a second eyeglass apparatus 200-2.

The display apparatus 100 displays only information about a content view set to a control object of the remote control device 300 through the content view set to the control object of the remote control device 300. In other words, the display apparatus 100 displays a second content, along with the information about the channel and the volume of the second content view through the second content view. The display apparatus 100 highlights and displays the information about the channel and the volume of the second content view.

Therefore, the user wearing the second eyeglass apparatus 200-2 recognizes that a command to control an operation state of the second content view that the user views is input through the remote control device 300.

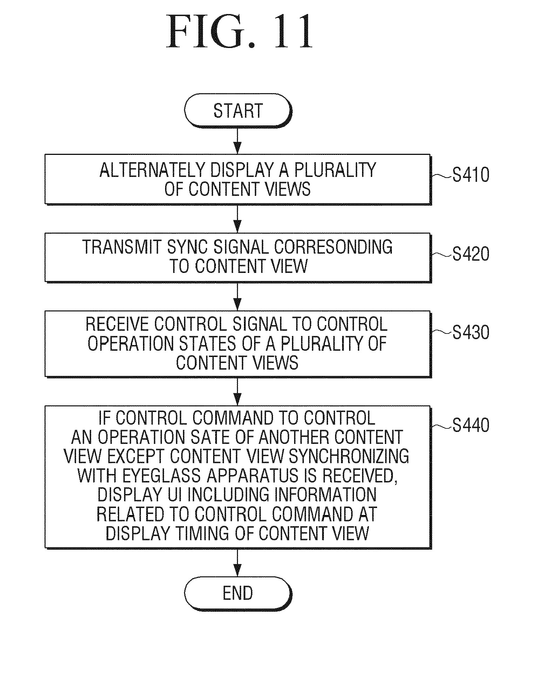

FIG. 11 is a flowchart illustrating a method of controlling a display apparatus according to an exemplary embodiment. In particular, the display apparatus is controlled by a remote control device, and operates along with an eyeglass apparatus.

In operation S410, the display apparatus alternately displays a plurality of content views. The display apparatus may alternately display a plurality of contents through the plurality of content views. A content view refers to a set of image frames of a content that a user wearing an eyeglass apparatus may view, when image frames of the content are alternately displayed.

In operation S420, the display apparatus communicates with the eyeglass apparatus to transmit a sync signal corresponding to one of the plurality of content views. The display apparatus transmits sync signals, which synchronize with timings, when contents are displayed through content views, to eyeglass apparatuses.

In operation S430, the display apparatus receives a control command to control operation states of the plurality of content views from the remote control device. An operation state may include a channel receiving a content displayed through a content view, a volume of the content, etc.

If a control command to control an operation state of another content view except a content view synchronized with the eyeglass apparatus is received, the display apparatus displays a UI including information related to the control command at a display timing of the content view in operation S440.

The information related to the control command may include at least one of information about the operation state of the another content view based on the control command, and information indicating that an operation state of a content view is uncontrollable according to the control command.

The information about the operation state of the another content view may include at least one of information about a channel changed according to the control command, and information about a volume changed according to the control command. In other words, a channel or volume state of the another content view may be changed based on the control command, and information about the changed channel and volume may be displayed through a content view.

The information indicating that the operation state of the content view is uncontrollable according to the control command may include a message indicating that an operation state of a content view provided to a user wearing the eyeglass apparatus is uncontrollable according to the control command.

In operation S440, the display apparatus may display information about the operation state of the content view synchronizing with the eyeglass apparatus, along with the information about the operation state of the another content view. The information about the operation state of the content view may include at least one of information about the channel and the volume of the content view.

In this case, in operation S440, the display apparatus may enable the information about the operation state of the another content view, and disable the information about the operation state of the content view synchronizing with the eyeglass apparatus. In other words, the display apparatus may display information about an operation state of another content view, which is a control object of the remote control device, along with information about an operation state of a content view, which is not a control object, at a timing when the content view synchronizing with the eyeglass apparatus is displayed and highlight the information about the operation state of the another content view which is the control object. Therefore, the user recognizes a content view that is a control object of the remote control device.

Also, in operation S440, the display apparatus may enable the information about the operation state of the another content view at a display timing of the another content view, and disable the information about the operation state of the content view synchronizing with the eyeglass apparatus. In other words, the display apparatus may display the information about the operation state of the another content view, which is the control object of the remote control device, along with the information about the operation state of the content view, which is not the control object, at the timing when the another content view is displayed and highlight the information about the operation state of the another content view which is the control object. Therefore, another user who views the content view that is the control object of the remote control device recognizes that a control command to control the operation state of the content view that the user views is received.

In these cases, the display apparatus may display each of the information about the operation state of the another content view, and the information about the operation state of the content view synchronizing with the eyeglass apparatus along with identification information corresponding to each content view. The identification information may be numbers, letters, etc., for distinguishing content views from one another.

Also, in these cases, the display apparatus may arrange and display the information about the operation state of the another content view under the information about the operation state of the content view synchronizing with the eyeglass apparatus. The display apparatus may arrange the information about the operation state of the content view which is synchronized with the eyeglass apparatus under the information about the operation state of the another content view, in order to display the information about the operation state of the content view at the display timing of the another content view.

Therefore, the user checks a content view that the user views.

These exemplary embodiments are as described above. Thus, their repeated descriptions and illustrations will omitted.

A program for performing methods according to the above-described various exemplary embodiments may be stored and used on various types of recording media.

In detail, a code for performing the above-described methods may be stored on various types of computer readable recording media such as a random access memory (RAM), a flash memory, a read only memory (ROM), an Erasable Programmable ROM (EPROM), an Electronically Erasable and Programmable ROM (EEPROM), a register, a hard disk, a removable disk, a memory card, a USB memory, a CD-ROM, etc.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus which is controlled through a remote control device and operates with an eyeglass apparatus, the display apparatus comprising:
a display which alternately displays a plurality of content views;
a communicator which communicates with the eyeglass apparatus to transmit a sync signal corresponding to one of the plurality of content views to the eyeglass apparatus;
a control command receiver which receives a control command to control operation states of the plurality of content views from the remote control device; and
a controller which, if the control command to control an operation state of another content view is received, except a content view synchronized with the eyeglass apparatus, controls the display to display a user interface (UI) comprising information related to the control command at a display timing of the content view.

2. The display apparatus of claim 1, wherein the information related to the control command comprises at least one of information about the operation state of the another content view based on the control command, and information indicating that the operation state of the content view is uncontrollable, according to the control command.

3. The display apparatus of claim 2, wherein the controller displays the information about the operation state of the content view synchronized with the eyeglass apparatus along with the information about the operation state of the another content view.

4. The display apparatus of claim 3, wherein the controller enables the information about the operation state of the another content view, and disables the information about the operation state of the content view synchronized with the eyeglass apparatus.

5. The display apparatus of claim 3, wherein at a display timing of the another content view, the controller enables the information about the operation state of the another content view and disables the information about the operation state of the content view synchronized with the eyeglass apparatus.

6. The display apparatus of claim 4, wherein the controller displays each of the information about the operation state of the another content view and the information about the operation state of the content view synchronized with the eyeglass apparatus along with identification information corresponding to each content view.

7. The display apparatus of claim 4, wherein the controller arranges and displays the information about the operation state of the another content view under the information about the operation state of the content view synchronized with the eyeglass apparatus.

8. The display apparatus of claim 4, wherein the controller arranges the information about the operation state of the content view synchronized with the eyeglass apparatus under the information about the operation state of the another content view to display the information about the operation state of the content view at a display timing of the another content view.

9. A method of controlling a display apparatus which is controlled through a remote control device and operates with an eyeglass apparatus, the method comprising:
alternately displaying a plurality of content views;
communicating with the eyeglass apparatus to transmit a sync signal corresponding to one of the plurality of content views to the eyeglass apparatus;
receiving a control command to control operation states of the plurality of content views from the remote control device; and
displaying a user interface (UI) comprising information related to the control command at a display timing of the content view if the control command to control an operation state of another content view is received, except a content view synchronized with the eyeglass apparatus.

10. The method of claim 9, wherein the information related to the control command comprises at least one of information about the operation state of the another content view based on the control command, and information indicating that the operation state of the content view is uncontrollable, according to the control command.

11. The method of claim 10, wherein the information about the operation state of the content view synchronized with the eyeglass apparatus is displayed along with the information about the operation state of the another content view.

12. The method of claim 11, wherein the information about the operation state of the another content view is enabled, and the information about the operation state of the content view synchronized with the eyeglass apparatus is disabled.

13. The method of claim 11, wherein at a display timing of the another content view, the information about the operation state of the another content view is enabled, and the information about the operation state of the content view synchronized with the eyeglass apparatus is disabled.

14. The method of claim 12, wherein each of the information about the operation state of the another content view and the information about the operation state of the content view synchronized with the eyeglass apparatus is displayed along with identification information corresponding to each content view.

15. The method of claim 12, wherein the information about the operation state of the another content view is arranged and displayed under the information about the operation state of the content view synchronized with the eyeglass apparatus.
